# FASCICULE DE BREVET EUROPEEN

(11) **EP 4 602 434 B1**
(45) Date de publication et mention de la délivrance du brevet: **23.09.2026**
(21) Numéro de dépôt: 23793448.4
(22) Date de dépôt: 10.10.2023
(51) Int. Cl.: G02F 1/155, C03C 17/36

(54) **VITRAGE ELECTROCHROME**
ELEKTROCHROME VERGLASUNG
ELECTROCHROMIC GLAZING

(30) Priorité: 13.10.2022 FR 2210516
(43) Date de publication de la demande: 20.08.2025
(73) Titulaire: SAINT-GOBAIN GLASS FRANCE, 92400 Courbevoie (FR)
(72) Inventeur: PENILLARD, Anne, 93300 Aubervilliers (FR); NAEL, Pascal, 93300 Aubervilliers (FR); CHEMIN, Nicolas, 93300 Aubervilliers (FR); GUIMARD, Denis, 93300 Aubervilliers (FR); PATISSIER, Amaury, 93300 Aubervilliers (FR)
(74) Mandataire: Saint-Gobain Recherche
(86) Numéro de dépôt international: PCT/FR2023/051572
(87) Numéro de publication internationale: WO 2024/079419

(56) Documents cités:
- WO-A1-2021/229164
- CN-A- 102 815 873
- CN-A- 107 254 664
- US-A1- 2019 243 205

## Description

La présente invention est relative au domaine des vitrages électrochromes (EC). L'invention concerne en particulier un revêtement électroconducteur pour un dispositif électrochrome comprenant une couche fonctionnelle métallique à base d'argent présentant des propriétés électrochimiques améliorées.

Les dispositifs électrochromes et en particulier les vitrages électrochromes, sont des systèmes capables de moduler leur réponse optique, dans le visible ou dans l'infrarouge, sous l'action d'une tension électrique, permettant d'obtenir ainsi des revêtements à commandes électriques facilement ajustables.

Les dispositifs électrochromes comportent de manière connue un système électrochrome comprenant une succession d'au moins cinq éléments en couches indispensables au fonctionnement du dispositif, c'est-à-dire au changement de couleur réversible suite à l'application d'une alimentation électrique appropriée. Ces cinq éléments en couches sont les suivants :
- un premier revêtement électroconducteur transparent,
- une première couche active jouant le rôle d'électrode,
- une couche d'électrolyte,
- une seconde couche active jouant le rôle de contre électrode, et
- un deuxième revêtement électroconducteur transparent.

Au moins une couche active est à base d'un matériau électrochrome.

Ces cinq éléments en couches sont généralement en contact avec un ou deux substrat(s) transparent(s).

Les systèmes électrochromes se déclinent en trois catégories :
- la technologie inorganique dite « tout solide »,
- la technologie dite « hybride »,
- la technologie dite « tout polymère ».

Dans les systèmes électrochromes « tout solide », toutes les couches sont constituées de matériaux solides inorganiques. Ces systèmes peuvent comprendre un seul substrat. Des exemples de systèmes EC tout solide sont décrits dans les demandes de brevets EP-867 752, EP-831 360, WO 00/57243 et WO 00/71777.

Les systèmes électrochromes hybrides comprennent des couches actives inorganiques qui encadrent une couche électrolyte à base d'un polymère conducteur ionique. Ces systèmes comprennent traditionnellement deux substrats encadrant le système électrochrome. Des exemples de systèmes EC hybrides sont décrits dans les demandes de brevet EP-382 623, EP-518 754 et EP-532 408.

Dans les systèmes électrochromes « tout polymère », les couches actives et la couche d'électrolyte sont à base de polymère.

Le phénomène de coloration/décoloration dans le domaine du visible ou de modifications des propriétés optiques de façon plus générale, résulte d'un transfert de charge (ions/électrons) entre les deux couches actives.

Une couche active à base d'un matériau électrochrome est en mesure d'insérer réversiblement des ions. Quand les ions migrent vers cette couche, les propriétés optiques de cette dernière changent et elle passe réversiblement d'un état décoloré à un état coloré. L'autre couche active peut également être à base d'un matériau électrochrome.

Les matériaux électrochromes inorganiques sont très majoritairement des oxydes de métaux de transition, regroupés en deux familles : les oxydes à coloration cathodique, tel que l'oxyde de tungstène WO₃, qui présentent une coloration à l'état réduit, et les oxydes à coloration anodique, tels que l'oxyde d'iridium (IrOx) et l'oxyde de nickel (NiOx), qui sont colorés à l'état oxydé. On choisit généralement des couples de matériaux électrochromes cathodiques et anodiques, avec par exemple un matériau cathodique qui se colore à l'état inséré en association avec un matériau anodique, décoloré à l'état inséré.

La couche électrolyte doit présenter une bonne conductivité ionique et être isolant électronique. Les électrolytes du système électrochrome assurent le passage des ions mobiles dans leur domaine de stabilité électrochimique. En théorie, tous les ions monovalents, tels H+, Li+, Na+, K+, Ag+, divalents tels que Zn²⁺ et trivalents tels que Al³⁺ peuvent être utilisés. Les sels de lithium, d'alcalin ou d'hydrogène conviennent tout particulièrement.

À titre d'exemple, pour une couche active en oxyde de tungstène (WO₃) au contact d'une couche électrolyte à conduction ionique au lithium, il y a transfert d'ions Li⁺ entre les électrodes lorsqu'une tension est appliquée. La réaction électrochimique suivante est observée à la cathode : W⁶⁺O²⁻₃ (transparent) + x Li⁺ +x e⁻ → Li⁺ₓW⁶⁺₁₋ₓW⁵⁺ₓO²⁻₃ (bleu).

Les plages de tension permettant l'obtention du meilleur contraste entre état coloré et état décoloré peuvent être déterminées par voltampérométrie. Les cycles ou courbes voltampérométriques ou voltampérogramme (j = f(V)) consistent à suivre la variation de la densité de courant j dans l'intervalle de potentiel balayé. L'étude des variations de densité de courant sont significatives du comportement électrochimique des matériaux. Les potentiels de coloration (Vcoloration), les potentiels de décoloration (Vdécoloration) du matériau correspondant à des réactions d'oxydation dans la partie anodique (j > 0) ou des réactions de réduction dans la partie cathodique de la courbe (j < 0) ainsi que les plages de stabilité peuvent être déduits directement à partir de ces courbes.

Si on considère un dispositif électrochrome comprenant une couche active à coloration cathodique à base d'oxyde de tungstène et une couche d'électrolyte comprenant des ions lithium, on observe un état coloré à 2,3 V et un état décoloré à 3,2 V (vs Li/Li+).

Si on considère un dispositif électrochrome comprenant une couche active à coloration anodique à base d'oxyde de nickel et une couche d'électrolyte comprenant des ions lithium, le potentiel d'oxydation associé à la désinsertion des ions lithium est environ à 4 V tandis que la tension de décoloration peut être ajustée en dopant l'oxyde de nickel entre 1V et 2,5 V.

Si on considère les systèmes EC tout polymère connus comprenant une couche d'électrolyte comprenant des ions lithium, la plage de tension entre un état moins transparent vers un état plus transparent est comprise entre 2V et 4V vs Li/Li+.

Par conséquent, pour ces systèmes EC, les réactions permettant la coloration et la décoloration interviennent dans une fenêtre de potentiel comprise entre 1V et 4V. Les matériaux constituant les différents éléments en couche du système électrochrome doivent avoir des plages de stabilité électrochimique supérieures aux fenêtres de potentiel nécessaires pour obtenir les phénomènes de coloration/décoloration.

On entend par « plage de stabilité en tension » d'un matériau la plage de potentiel à laquelle peut être exposé un matériau sans que celui-ci ne subisse de réaction d'oxydation ou de réduction.

Lorsque qu'un matériau est sujet à un potentiel électrochimique en dehors de sa plage de stabilité et en présence des ions correspondants, il se produit une réaction d'oxydoréduction.

Dans le cas des systèmes électrochrome, les revêtements électroconducteurs sont exposés aux potentiels électrochimiques des matériaux actifs avec lesquels ils sont en contact. Cela signifie que les revêtements électroconducteurs du dispositif électrochrome doivent être stables dans la fenêtre de potentiel 2V à 4V, voire de 1V à 4V vs Li/Li+. Les revêtements électroconducteurs doivent donc présenter une plage de stabilité électrochimique relative au couple Li+/Li de préférence comprise entre 1V et 4V. Les matériaux constitutifs de ces revêtements conducteurs ne doivent pas subir de réaction d'oxydo-réduction dans cette plage de tension.

Les revêtements électroconducteurs connus comprennent des couches fonctionnelles conductrices à base d'oxyde transparent conducteur telles que des couches d'indium et d'étain ou des couches d'étain dopée au fluor ou des couches fonctionnelles métalliques notamment à base d'argent.

Les revêtements électroconducteurs à base de couche d'oxyde conducteur, bien qu'ils présentent une excellente stabilité électrochimique, ne présentent pas des propriétés conductrices suffisantes à transmission lumineuse élevée (>80%). Cela entraîne une commutation inhomogène et/ou une vitesse de commutation qui diminue lorsque la surface du système EC augmente. Enfin, dans certaines applications telles que des applications automobiles, des étapes de traitement supplémentaires telles que des étapes de trempe ou de bombage sont parfois nécessaires. Ces étapes supplémentaires sont susceptibles d'altérer les revêtements à base d'oxyde conducteur. En effet, ces revêtements doivent être épais pour permettre d'obtenir les valeurs de résistivité souhaitées. Or, ces revêtements épais sont sensibles à la fissuration lors de traitement thermique.

Les revêtements conducteurs comprenant une couche fonctionnelle métallique à base d'argent présentent une conductivité électrique supérieure et une transparence élevée. Cependant, la faible stabilité électrochimique de la couche fonctionnelle d'argent limite l'utilisation de ce type de revêtements conducteurs dans des dispositifs électrochromes. Les revêtements conducteurs à base d'argent subissent notamment des réactions d'oxydoréduction par rapport au couple Li/Li+ dans la plage 1V-4V. A faible potentiel, ces réactions entrainent pour une couche à base d'argent une réduction du matériau Ag, la formation d'alliage métallique (tel que LiAg), ou la production de gaz réduit (dihydrogène). A haut potentiel, ces réactions entrainent une oxydation du matériau Ag+, la formation d'oxyde (AgO) et/ou la production de gaz oxydé (dioxygène). Dans le cadre de réaction à haut potentiel, on peut aussi parler de « corrosion » des matériaux.

Les revêtements électroconducteurs connus de ce type comprennent :
- éventuellement une première couche diélectrique ou premier revêtement diélectrique,
- une couche métallique à base d'argent,
- éventuellement une couche de blocage,
- une deuxième couche diélectrique ou revêtement diélectrique.

Des voltamogrammes cycliques ont été réalisés afin de déterminer la plage de stabilité en tension de ces revêtements électroconducteur à partir d'un montage à base de trois électrodes avec une contre électrode de lithium métallique, une électrode de référence de lithium métallique et une électrode de travail comprenant le revêtement éléctroconducteur à tester. L'électrolyte est composé d'une solution de LiClO4/PC. L'électrode de travail comprend un substrat de verre de 2 mm recouvert d'un revêtement électroconducteur connu à base d'argent comprenant en partant du substrat la séquence (SiN/SnZnO/ZnO dopé Al/Ag). Le voltamogramme a été réalisé dans la fenêtre de potentiel de 2 à 4 V par rapport à Li/Li+ à une vitesse de balayage de 2 mV/s.

Aucune réaction d'oxydation n'est observée entre 2 V et 3,4 V. Une légère augmentation de la densité de courant est observée autour de 3,4 V vs Li/Li+, suivie d'une forte augmentation autour de 3,7 V vs Li/Li+. Cette forte augmentation est imputable à l'oxydation de l'Ag métallique en ions Ag⁺ qui se dissolvent dans l'électrolyte. Cela démontre que de tels revêtements conducteur ne peuvent pas être utilisés dans des dispositifs électrochrome sauf à limiter le contraste accessible du dispositif EC en imposant des potentiels inférieurs à 3,7 V. Dans ce cas, on n'obtient pas de décoloration ou de coloration complète. Le document WO 2021/229164 A1 fait partie de l'état de la technique antérieure qui peut être considéré comme utile à la compréhension de l'invention.

Afin de pouvoir bénéficier dans des dispositifs électrochromes des propriétés optiques et conductrices améliorées des revêtements électroconducteurs à base d'argent, il est nécessaire d'agrandir leur plage de stabilité électrochimique.

La présente invention concerne un revêtement électroconducteur comprenant une couche fonctionnelle métallique à base d'argent présentant une stabilité électrochimique améliorée. Le revêtement de l'invention est particulièrement adapté pour une utilisation dans des dispositifs électrochrome.

Le demandeur à découvert que l'utilisation de certaines couches de blocage en combinaison avec une couche métallique à base de zinc ou d'indium à proximité de la couche fonctionnelle à base d'argent, permet d'obtenir une stabilité électrochimique améliorée notamment autour de 3,7 V vs Li/Li+. Cette amélioration de la stabilité électrochimique rend compatible l'utilisation du revêtement conducteur à base d'agent pour des applications EC.

L'invention concerne un matériau comprenant un substrat revêtu d'un premier revêtement conducteur comprenant en partant du substrat :
- un premier revêtement diélectrique,
- une couche fonctionnelle métallique comprenant une couche base d'argent,
- une couche de blocage située immédiatement au contact d'une couche métallique fonctionnelle à base d'argent, choisie parmi les couches métalliques à base d'un métal ou d'un alliage métallique, les couches de nitrure métallique, les couches d'oxyde métallique et les couches d'oxynitrure métallique, d'un ou plusieurs éléments choisis parmi le titane, le nickel, le chrome, le tantale et le niobium, les couches d'oxyde d'aluminium et les couches d'oxyde de silicium,
- au moins une couche métallique à base de zinc ou d'indium, située au-dessus ou en dessous de cette couche métallique fonctionnelle à base d'argent, directement au contact ou séparée par une ou plusieurs couches dont l'épaisseur totale est inférieure ou égale à 20 nm,
- de préférence, un deuxième revêtement diélectrique comprenant au moins une couche d'oxyde conducteur, la somme des épaisseurs des couches d'oxyde conducteur dans le deuxième revêtement diélectrique est supérieure à 30 nm, de préférence supérieure à 40 nm.

L'invention permet d'augmenter la plage de stabilité du revêtement électroconducteur à base d'argent au-dessus de 3,7 V par rapport à Li/Li+.

L'invention concerne également un revêtement conducteur comprenant une couche fonctionnelle métallique comprenant une couche base d'argent, de préférence transparent, stable électrochimiquement dans la fenêtre de potentiel de 2 à 4 V par rapport à Li/Li+. Le revêtement conducteur comprend :
- une couche fonctionnelle métallique comprenant une couche base d'argent,
- une couche de blocage située immédiatement au contact d'une couche métallique fonctionnelle à base d'argent,
- au moins une couche métallique à base de zinc, située au-dessus ou en dessous de cette couche métallique fonctionnelle à base d'argent, directement au contact ou séparée par une ou plusieurs couches dont l'épaisseur totale est inférieure ou égale à 20 nm.

Les propriétés les plus avantageuses de l'invention sont obtenues après traitement thermique à température élevée. Le revêtement électroconducteur ou le matériau de l'invention, c'est à dire le substrat revêtu du revêtement électroconducteur subit de préférence un traitement thermique à haute température, c'est à dire à une température supérieure à 250°C, de préférence supérieure à 300°C, 400°C ou 500°C.

Les couches de blocage ont pour objectif d'améliorer les propriétés électrochimiques des couches d'argent. Les couches de blocage sont de préférence des couches déposées sous forme métallique ou sous formé nitrurée, à base d'un ou plusieurs éléments choisis parmi le nickel, le fer, le zirconium, le titane, le tungstène. Ces couches de blocage ont pour objectif de protéger la couche d'argent et de s'opposer à la diffusion des ions provenant de la couche active tels que les ions Li+.

Sans vouloir être lié par un quelconque théorie, il est probable qu'une partie de la couche de zinc ou d'indium métallique s'allie à l'argent notamment lors du traitement thermique à température élevée. La couche de blocage permet de moduler ce dopage.

Chacune de ces couches contribue à améliorer la stabilité électrochimique de la couche métallique à base d'argent. Cependant, la combinaison de la couche de blocage et de la couche de zinc conduit aux meilleurs résultats en terme de contraste élevé pour le dispositif EC final et en terme de stabilité électrochimique pour le revêtement électroconducteur.

La couche à base de zinc ou d'indium métallique doit se trouver à proximité de la couche d'argent. Elle peut se trouver, au-dessus, en dessous ou de chaque côté de la couche d'argent.

Grâce à cette structure de revêtement particulier, il est possible d'obtenir, un revêtement conducteur transparent présentant une tenue électrochimique compatible avec les systèmes EC tout en ayant des propriétés de conductivité électrique élevée ainsi que des niveaux de transmission lumineuse élevés notamment supérieurs à 60%, 70 % ou 80 %.

L'invention concerne également un matériau présentant la ou les caractéristiques suivantes :
- la couche de blocage présente une épaisseur comprise entre 0,1 et 5,0 nm ou entre 0,5 et 2 mn,
- la couche de blocage est choisie parmi une couche de nitrure de titane, les couches métalliques à base de nickel et/ou de chrome, les couches d'oxyde de nickel et/ou de chrome, les couches d'oxyde d'aluminium, les couches d'oxyde de silicium,
- la couche de blocage est choisie parmi les couches métalliques à base de nickel comprenant au moins 20 % en masse de nickel par rapport à la masse de la couche métallique à base de nickel,
- la couche métallique à base de zinc ou d'indium est séparée de la couche métallique fonctionnelle à base d'argent par au moins une couche de blocage,
- l'épaisseur de toutes les couches séparant la couche métallique fonctionnelle à base d'argent de la couche métallique à base de zinc ou d'indium est inférieure ou égale à 10 nm,
- la couche métallique à base de zinc ou d'indium est située au-dessus de la couche métallique fonctionnelle à base d'argent,
- l'épaisseur de la couche métallique à base de zinc ou d'indium est comprise de 0,2 à 10 nm,
- les couches métalliques à base de zinc comprennent au moins 20 % en masse de zinc par rapport à la masse de la couche métallique à base de zinc,
- le deuxième revêtement diélectrique comprend une couche d'oxyde conducteur choisie parmi l'oxyde mixte d'étain et d'indium ou l'oxyde de zinc dopé à l'aluminium et/ou au gallium,
- le deuxième revêtement diélectrique comprend une couche d'oxyde conducteur à base d'oxyde de zinc dopé à l'aluminium d'épaisseur supérieure à 50 nm,
- le premier revêtement diélectrique comporte au moins une couche diélectrique cristallisée, notamment à base d'oxyde de zinc, éventuellement dopé à l'aide d'au moins un autre élément, comme l'aluminium,
- le premier revêtement diélectrique comporte une couche à base de nitrure ou d'oxynitrure de silicium d'aluminium et/ou de zirconium, et/ou une couche à base d'oxyde de zinc et d'étain,
- l'empilement a subi un traitement thermique à une température supérieure à 300 °C, de préférence 500 °C, à 550° ou à 600 °C,
- la couche fonctionnelle à base d'argent comprend du zinc,
- le substrat est en verre, notamment silico-sodo-calcique ou en matière organique polymérique,
- le matériau comprend en outre une première couche active comprenant un matériau électrochrome située au contact du revêtement électroconducteur,
- le matériau comprend en outre une couche électrolyte située au contact de la première couche active comprenant un matériau électrochrome, de préférence l'électrolyte est un électrolyte à conduction ionique au lithium,
- le matériau comprend en outre une deuxième couche active située au contact de la couche électrolyte,
- le matériau comprend en outre un deuxième revêtement électroconducteur situé au contact de la couche d'électrolyte.

L'invention concerne également un système électrochrome comprenant:
- un matériau selon l'invention comprenant premier revêtement électroconducteur transparent,
- une première couche active comprenant un matériau électrochrome,
- une couche électrolyte,
- une deuxième couche active et
- un deuxième revêtement électroconducteur transparent,
- éventuellement un substrat.

Le matériau électrochrome des couches actives peut être à base de matériau minéral tel que l'oxyde de tungstène, l'oxyde de nickel, l'oxyde d'iridium, l'oxyde de cérium ou de matériau organique comme les polymères conducteurs électroniques tels que la polyaniline ou le (poly(3,4-éthylènedioxythiophène)) (PEDOT) ou le bleu de Prusse. Ces matériaux peuvent insérer des cations, notamment des protons ou des ions lithium.

Le matériau électrochrome de la première couche active peut être à base d'un oxyde d'un élément choisi parmi le tungstène, le nickel, l'iridium, le chrome, le fer, le cobalt, le rhodium, ou à base d'un oxyde mixte d'au moins deux de ces éléments, notamment l'oxyde mixte de nickel et de tungstène. Il est de préférence à base d'oxyde de tungstène.

Le matériau électrochrome de la deuxième couche active ou contre-électrode est de préférence à base d'un oxyde d'un élément choisi parmi le tungstène, le nickel, l'iridium, le chrome, le fer, le cobalt, le rhodium, ou à base d'un oxyde mixte d'au moins deux de ces éléments, notamment l'oxyde mixte de nickel et de tungstène. Il est de préférence à base d'oxyde de nickel ou d'oxyde d'iridium (matériau électrochrome anodique).

Si le matériau électrochrome de la première couche active est l'oxyde de tungstène, donc un matériau électrochrome cathodique, dont l'état coloré correspond à l'état le plus réduit, un matériau électrochrome anodique à base d'oxyde de nickel ou d'iridium peut être par exemple utilisé pour la contre-électrode. Il peut notamment s'agir d'une couche d'oxyde mixte de vanadium et de tungstène ou d'oxyde mixte de nickel et de tungstène.

L'épaisseur des couches actives est généralement comprise entre 50 nm et 600 nm, en particulier entre 150 nm et 250 nm.

L'épaisseur de la couche d'électrolyte peut être comprise entre 1 nm et 1 mm. Lorsque la couche électrolyte est en matériau inorganique son épaisseur est de préférence comprise entre 1 et 300 nm, entre 1 et 50 nm ou entre 1 et 10 nm. Lorsque la couche électrolyte est en matériau polymérique, son épaisseur est de préférence comprise entre 100 et 800 µm ou entre 100 et 500 µm.

Les deux revêtements électroconducteurs doivent être reliées à des connecteurs d'amenée de courant respectifs. Ces connecteurs, par exemple barre omnibus et fils, sont respectivement mis en contact avec les revêtements électroconducteurs pour amener l'alimentation électrique appropriée.

L'invention concerne également un système électrochrome comprenant deux substrats rendus solidaires par l'intermédiaire d'un châssis ou cadre.

Dans toute la description le substrat selon l'invention est considéré posé horizontalement. Le revêtement électroconducteur est déposé au-dessus du substrat. Le sens des expressions « au-dessus » et « en-dessous » et « inférieur » et « supérieur » est à considérer par rapport à cette orientation. A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une (ou plusieurs) couche(s) intercalée(s) entre ces deux couches (ou couche et revêtement).

Toutes les caractéristiques lumineuses décrites sont obtenues selon les principes et méthodes de la norme européenne EN 410 se rapportant à la détermination des caractéristiques lumineuses et solaires des vitrages utilisés dans le verre pour la construction.

Les caractéristiques préférées qui figurent dans la suite de la description sont applicables aussi bien au matériau selon l'invention que, le cas échéant, au vitrage ou au système selon l'invention.

Le revêtement électroconducteur est déposé par pulvérisation cathodique assistée par un champ magnétique (procédé magnétron). Selon ce mode de réalisation avantageux, toutes les couches du revêtement sont déposées par pulvérisation cathodique assistée par un champ magnétique.

Sauf mention contraire, les épaisseurs évoquées dans le présent document sont des épaisseurs physiques.

La présente invention convient dans le cas de revêtement à une seule couche fonctionnelle à base d'argent. La solution de l'invention convient également dans le cas de revêtement à plusieurs couches fonctionnelles à base d'argent, notamment à deux ou trois couches fonctionnelles. Le revêtement comprend au moins une ou une seule couche métallique fonctionnelle à base d'argent.

La couche métallique fonctionnelle à base d'argent, avant ou après traitement thermique, comprend au moins 95,0 %, de préférence au moins 96,5 % et mieux au moins 98,0 % en masse d'argent par rapport à la masse de la couche fonctionnelle.

De préférence, la couche métallique fonctionnelle à base d'argent avant traitement thermique comprend moins de 1,0 % en masse de métaux autres que de l'argent par rapport à la masse de la couche métallique fonctionnelle à base d'argent.

Après traitement thermique, la couche métallique fonctionnelle à base d'argent est susceptible de comprendre une proportion de zinc ou d'indium. Une mesure du dopage en zinc ou d'indium peut être réalisée par exemple par analyse microsonde de Castaing (ElectroProbe MicroAnalyzer ou EPMA en anglais) ou par mesure par sonde atomique tomographique (« Atom Probe Tomography »).

L'épaisseur de la couche fonctionnelle à base d'argent est comprise de 5 à 25 nm.

La couche métallique à base de zinc se trouve dans un revêtement diélectrique au contact de ladite couche métallique fonctionnelle à base d'argent. Cela signifie que la couche métallique à base de zinc n'est pas séparée de ladite couche métallique fonctionnelle à base d'argent par une autre couche métallique fonctionnelle à base d'argent.

La présence d'une couche de zinc ou d'indium métallique à proximité de la couche d'argent provoque la migration d'éléments zinc métalliques dans la couche d'argent notamment lors d'un traitement thermique. La présence d'une couche de blocage au contact de la couche d'argent semble permettre de ralentir la diffusion du zinc ou d'indium métallique à travers la couche d'argent.

Prenons le cas où la couche métallique à base de zinc est située au-dessus de la couche d'argent. Si les éléments zinc métalliques diffusent à des températures plus basses que la température du traitement thermique, en l'absence d'une sur-couche de blocage, ils peuvent facilement traverser la couche d'argent sans être retenus suffisamment. En revanche, lorsqu'une sur-couche de blocage est insérée entre les couches d'argent et de zinc, la couche de blocage peut faire barrière et freiner la diffusion des éléments zinc métalliques. Cela permet de conserver des éléments zinc métalliques dans la couche d'argent.

Dans une moindre mesure, l'utilisation d'une sous-couche de blocage assure également la fonction de prévenir de la diffusion des éléments zinc métalliques et de les confiner à proximité de la couche d'argent. Des configurations selon ce mode de réalisation peuvent être avantageuses.

De préférence, la couche de blocage se trouve entre la couche fonctionnelle et la couche métallique à base de zinc ou d'indium.

Dans les paragraphes suivants, les couches métalliques à base de zinc ou d'indium sont définies telles qu'elles sont obtenues lors du dépôt, c'est à dire avant traitement thermique. Dans la mesure où le traitement thermique induit la migration d'éléments zinc métallique, il n'est pas possible de déterminer avec certitude, selon les épaisseurs déposées, comment est modifiée cette couche de zinc ou d'indium métallique suite au traitement thermique.

On entend par « couche métallique », une couche ne comprenant pas plus de 30 %, 20 % ou 10 % d'oxygène et/ou d'azote en pourcentage atomique dans la couche.

Les couches sont déposées sous forme métallique. Suite au dépôt et avant traitement thermique, elles ne devraient pas contenir plus de 10 % d'oxygène et/ou d'azote. Cependant, selon la nature de la couche déposée directement au-dessus, ces couches métalliques à base de zinc sont susceptibles de subir une oxydation partielle pouvant conduire à des proportions d'oxygène ou d'azote plus élevées. Ces proportions sont toutefois inférieures à 30 ou 20 %. En tout état de cause, au moins une partie en épaisseur de ces couches métalliques à base de zinc ou d'indium n'est pas oxydée ou nitrurée.

Les couches métalliques à base de zinc, (avant traitement thermique), comprennent, au moins 20 %, au moins 30 %, au moins 40 %, au moins 50 %, au moins 60 %, au moins 70 %, au moins 80 %, au moins 90 %, au moins 95 %, au moins 96 %, au moins 97 %, au moins 98 %, au moins 99 % ou 100 % en masse de zinc par rapport à la masse de la couche métallique à base de zinc.

Les couches métalliques à base d'indium, (avant traitement thermique), comprennent, au moins 20 %, au moins 30 %, au moins 40 %, au moins 50 %, au moins 60 %, au moins 70 %, au moins 80 %, au moins 90 %, au moins 95 %, au moins 96 %, au moins 97 %, au moins 98 %, au moins 99 % ou 100 % en masse d'indium par rapport à la masse de la couche métallique à base d'indium.

Les couches métalliques à base de zinc peuvent être choisies parmi :
- les couches métalliques de zinc,
- les couches métalliques de zinc dopées,
- les couches métalliques à base d'alliage de zinc.

Selon l'invention, on entend par « couche métallique de zinc », des couches métalliques de zinc pur pouvant tout de même comprendre quelques impuretés. Dans ce cas, la masse totale de zinc représente au moins 99 % en masse de la masse de la couche métallique à base de zinc.

Selon l'invention, les couches de zinc dopées comprennent au moins 90,0 %, au moins 95 %, au moins 96 %, au moins 97 %, au moins 98 % ou au moins 99 % en masse de zinc de la masse de la couche métallique à base de zinc.

Les couches de zinc dopées peuvent être choisies parmi les couches à base de zinc et d'au moins un élément choisi parmi le titane, le nickel, l'aluminium, l'étain, le niobium, le chrome, le magnésium, le cuivre, le silicium, l'argent ou l'or.

Selon l'invention, les couches à base d'alliage de zinc, comprennent au moins 20 %, au moins 30 %, au moins 40 %, au moins 50 %, au moins 60 %, au moins 70 %, au moins 80 % ou au moins 90 % en masse de zinc de la masse de la couche métallique à base de zinc.

Les couches à base d'alliage de zinc peuvent être choisies parmi les couches à base de zinc et d'au moins un élément choisi parmi le titane, le nickel, le chrome, l'étain. A titre d'exemple, on peut citer les alliages binaires de zinc et de titane tels que Zn₂Ti ou les alliages ternaires à base de zinc, de nickel et de chrome tels que ZnNiCr.

L'épaisseur de la couche métallique à base de zinc ou d'indium est comprise de 0,2 à 10 nm.

L'épaisseur de la couche métallique à base de zinc ou d'indium peut être :
- supérieure ou égale à 0,2 nm, supérieure ou égale à 0,5 nm, supérieure ou égale à 1,0 nm, supérieure ou égale à 1,2 nm ou supérieure ou égale à 1,5 nm, supérieure ou égale à 2 nm et/ou
- inférieure ou égale à 10 nm, inférieure ou égale à 8 nm, inférieure ou égale à 7 nm, inférieure ou égale à 6 nm, inférieure ou égale à 5 nm ou inférieure ou égale à 4 nm.

De préférence, la ou les couches métalliques à base de zinc ou d'indium sont situées au-dessus de la couche métallique fonctionnelle à base d'argent.

Le revêtement comprend une couche de blocage située au-dessus et immédiatement au contact de la couche métallique fonctionnelle à base d'argent et/ou une couche de blocage située en dessous et immédiatement au contact de la couche métallique fonctionnelle à base d'argent.

De préférence, la ou les couches métalliques à base de zinc ou d'indium sont situées au-dessus d'une couche d'argent et au-dessus d'une couche de blocage. Dans cette configuration la couche métallique à base de zinc ou d'indium est située au-dessus de la couche métallique fonctionnelle à base d'argent et est séparée de cette couche par au moins une surcouche de blocage.

Les couches de blocage sont choisies parmi les couches métalliques à base d'un métal ou d'un alliage métallique, les couches de nitrure métallique, les couches d'oxyde métallique et les couches d'oxynitrure métallique d'un ou plusieurs éléments choisis parmi le titane, le nickel, le chrome, le tantale et le niobium telles que Ti, TiN, TiOx, Nb, NbN, Ni, NiN, Cr, CrN, NiCr, NiCrN.

Lorsque ces couches de blocage sont déposées sous forme métallique, nitrurée ou oxynitrurée, ces couches peuvent subir une oxydation partielle ou totale selon leur épaisseur et la nature des couches qui les entourent, par exemple, au moment du dépôt de la couche suivante ou par oxydation au contact de la couche sous-jacente.

Les couches de blocage peuvent être choisies parmi :
- les couches métalliques notamment d'un alliage de nickel et de chrome (NiCr), ou de titane,
- les couches de nitrure métallique notamment de nitrure de titane ou de nitrure de nickel et/ou de chrome.

Avantageusement, les couches de blocage sont des couches métalliques à base de nickel. Les couches de blocage métallique à base de nickel peuvent comprendre, (avant traitement thermique), au moins 20 %, au moins 30 %, au moins 40 %, au moins 50 %, au moins 60 %, au moins 70 %, au moins 80 %, au moins 90 %, au moins 95 %, au moins 96 %, au moins 97 %, au moins 98 %, au moins 99 % ou 100 % en masse de nickel par rapport à la masse de la couche métallique à base de nickel.

Les couches métalliques à base de nickel peuvent être choisies parmi :
- les couches métalliques de nickel,
- les couches métalliques de nickel dopées,
- les couches métalliques à base d'alliage de nickel.

Les couches métalliques à base d'alliage de nickel peuvent être à base d'alliage de nickel et de chrome.

Chaque couche de blocage présente une épaisseur comprise entre 0,1 et 5,0 nm. L'épaisseur de ces couches de blocage peut être :
- d'au moins 0,1 nm, d'au moins 0,2 nm, d'au moins 0,5 nm et/ou
- d'au plus 5,0 nm, d'au plus 4,0 nm, d'au plus 3,0 nm, d'au plus 2,0 nm.

Dans des modes de réalisation avantageux, le revêtement comprend également une couche diélectrique cristallisée située en dessous et à proximité de la couche d'argent. Ces couches diélectriques cristallisées sont en général des couches à base d'oxyde de zinc.

La couche métallique à base de zinc ou d'indium peut être située :
- au-dessus d'une couche métallique fonctionnelle à base d'argent, la couche de zinc métallique est au contact de la couche métallique fonctionnelle à base d'argent (séquence Ag/Zn),
- au-dessus d'une couche métallique fonctionnelle à base d'argent, la couche de zinc métallique est séparée de la couche métallique fonctionnelle à base d'argent par au moins une surcouche de blocage (séquence Ag//Couche de blocage//Zn),
- au-dessus d'une couche métallique fonctionnelle à base d'argent et en dessous et au contact d'une couche d'oxyde conducteur, la couche de zinc métallique est séparée de la couche métallique fonctionnelle à base d'argent par au moins une surcouche de blocage (séquence Ag//Couche de blocage//Zn//Couche d'oxyde conducteur),
- en-dessous d'une couche métallique fonctionnelle à base d'argent, la couche de zinc métallique est au contact de la couche métallique fonctionnelle à base d'argent (séquence Zn/Ag)
- en-dessous d'une couche métallique fonctionnelle à base d'argent, la couche de zinc métallique est séparée de la couche métallique fonctionnelle à base d'argent par au moins une sous couche de blocage (séquence Zn//Couche de blocage//Ag),
- en-dessous d'une couche métallique fonctionnelles à base d'argent et au-dessus et au contact d'une couche diélectrique cristallisée, la couche de zinc métallique est au contact de la couche métallique fonctionnelle à base d'argent (séquence Couche cristallisée/Zn/Ag),
- en-dessous d'une couche métallique fonctionnelles à base d'argent et au-dessus et au contact d'une couche diélectrique cristallisée, la couche de zinc métallique est séparée de la couche métallique fonctionnelle à base d'argent par au moins une sous couche de blocage (séquence Couche cristallisée/Zn//Couche de blocage//Ag),
- en-dessous d'une couche métallique fonctionnelle à base d'argent et en-dessous, et au contact d'une couche diélectrique cristallisée, la couche diélectrique cristallisée est au contact ou séparée de la couche métallique fonctionnelle à base d'argent par au moins une sous couche de blocage (séquence Zn/Couche cristallisée//éventuellement Couche de blocage//Ag).

L'épaisseur physique de toutes les couches séparant la couche métallique fonctionnelle à base d'argent de la couche métallique à base de zinc ou d'indium peut être comprise entre 0 et 15,0 nm, voire entre 0 et 10 nm, voire entre 0 et 5 nm, entre à 0,2 et 5 nm, entre 0,5 et 3 nm, entre 0,8 et 1,5 nm.

L'épaisseur de toutes les couches séparant la couche métallique fonctionnelle à base d'argent de la couche métallique à base de zinc ou d'indium peut être :
- supérieure ou égale à 0,2 nm, supérieure ou égale à 0,4 nm, supérieure ou égale à 0,5 nm, supérieure ou égale à 1 nm, supérieure ou égale à 2 nm, supérieure ou égale à 3 nm, supérieure ou égale à 4 nm, supérieure ou égale à 5 nm, supérieure ou égale à 6 nm, supérieure ou égale à 7 nm, supérieure ou égale à 8 nm ou supérieure ou égale à 9 nm et/ou
- inférieure ou égale à 20 nm, inférieure ou égale à 15 nm, inférieure ou égale à 13 nm, inférieure ou égale à 12 nm, inférieure ou égale à 11 nm, inférieure ou égale à 10 nm, inférieure ou égale à 9 nm ou inférieure ou égale à 8 nm, inférieure ou égale à 7 nm, inférieure ou égale à 6 nm, inférieure ou égale à 5 nm, inférieure ou égale à 4 nm, inférieure ou égale à 3 nm, inférieure ou égale à 2 nm, inférieure ou égale à 1,5 nm.

La configuration selon laquelle la couche métallique à base de zinc ou d'indium est située au-dessus et séparée de la couche métallique fonctionnelle à base d'argent par une surcouche de blocage semble donner les meilleurs résultats.

Il est également possible d'utiliser dans ces configurations une sous couche de blocage. L'utilisation de la sous-couche de blocage permet d'améliorer la résistance mécanique. On combine alors une sous-couche de blocage située en-dessous d'une couche d'argent et une couche métallique à base de zinc ou d'indium située au-dessus et directement au contact de ladite couche d'argent ou séparée de la couche d'argent par une sur-couche de blocage.

Selon l'invention, on entend par « couche située à proximité de », une couche située, par ordre de préférence croissant à moins de 15 nm, à moins de 10 nm, à moins de 5 nm, à moins de 4 nm, à moins de 3 nm, à moins de 2 nm d'une autre couche.

Les modes de réalisation suivants sont particulièrement avantageux car donnent les meilleurs résultats :
- la couche métallique à base de zinc ou d'indium est située à proximité de la couche d'argent et/ou
- la couche métallique à base de zinc ou d'indium est séparée de la couche d'argent par au moins une couche de blocage, et/ou
- la couche métallique à base de zinc ou d'indium est située au-dessus de la couche d'argent, et/ou
- le revêtement comprend une couche de blocage située immédiatement au dessus et au contact de la couche métallique fonctionnelle à base d'argent.

Les couches métalliques à base de zinc ou d'indium, pour être efficaces, doivent permettre la diffusion d'éléments zinc ou indium métalliques vers la couche d'argent. Il est probable que si ces couches de zinc sont séparées de la couche d'argent :
- par une ou plusieurs couches diélectriques trop épaisses, par exemple des couches d'oxyde de zinc et d'étain trop épaisses et/ou
- par une ou plusieurs couches diélectriques à fonction barrière telles des couches de nitrures de silicium et/ou d'aluminium et/ou de zirconium,
la diffusion de ces éléments zinc ou indium métalliques sera fortement réduite voir empêchée. La couche métallique à base de zinc ou d'indium devient alors inefficace du point de vue de l'amélioration de propriétés électrochimiques.

Le revêtement électroconducteur peut comprendre une ou plusieurs couches métalliques à base de zinc ou d'indium.

Le revêtement électroconducteur comprend au moins une couche fonctionnelle et au moins deux revêtements diélectriques comportant au moins une couche diélectrique, de manière à ce que chaque couche fonctionnelle soit disposée entre deux revêtements diélectriques.

Par « revêtement diélectrique » au sens de la présente invention, il faut comprendre qu'il peut y avoir une seule couche ou plusieurs couches de matériaux différents à l'intérieur du revêtement. Un « revêtement diélectrique » selon l'invention comprend majoritairement des couches diélectriques. Cependant, selon l'invention ces revêtements peuvent comprendre également des couches d'autre nature notamment des couches absorbantes par exemple métalliques.

On considère qu'un « même » revêtement diélectrique se situe :
- entre le substrat et la première couche fonctionnelle,
- entre chaque couche métallique fonctionnelle à base d'argent,
- au-dessus de la dernière couche fonctionnelle (la plus éloignée du substrat).

Par « couche diélectrique » au sens de la présente invention, il faut comprendre que du point de vue de sa nature, le matériau est « non métallique », c'est-à-dire n'est pas un métal. Dans le contexte de l'invention, ce terme désigne un matériau présentant un rapport n/k sur toute la plage de longueur d'onde du visible (de 380 nm à 780 nm) égal ou supérieur à 5. n désigne l'indice de réfraction réel du matériau à une longueur d'onde donnée et k représente la partie imaginaire de l'indice de réfraction à une longueur d'onde donnée ; le rapport n/k étant calculé à une longueur d'onde donnée identique pour n et pour k.

L'épaisseur d'un revêtement diélectrique correspond à la somme des épaisseurs des couches le constituant.

Les revêtements présentent une épaisseur supérieure à 15 nm, de préférence comprise entre 15 et 200 nm.

Les couches diélectriques des revêtements présentent les caractéristiques suivantes seules ou en combinaison :
- elles sont déposées par pulvérisation cathodique assistée par champ magnétique,
- elles sont choisies parmi les oxydes ou nitrures d'un ou plusieurs éléments choisi(s) parmi le titane, le silicium, l'aluminium, le zirconium, l'étain, l'indium et le zinc,
- elles ont une épaisseur supérieure à 2 nm, de préférence comprise entre 2 et 100 nm.

Le revêtement diélectrique situé au-dessus de la couche fonctionnelle métallique à base d'argent doit être suffisamment conducteur pour que le revêtement électroconducteur conserve sa fonction d'électrode.

Le revêtement diélectrique situé au-dessus de la couche fonctionnelle métallique à base d'argent comprend au moins une couche d'oxyde conducteur. Les couches d'oxyde conducteur sont choisies parmi l'oxyde mixte d'étain et d'indium, l'oxyde d'indium dopé à l'étain (ITO « Indium Tin Oxide »), l'oxyde de zinc dopé tel que l'oxyde de zinc dopé notamment à l'aluminium (AZO) et/ou au gallium, l'oxyde de ruthénium dopé et l'oxyde d'étain dopé au fluor (SnO2:F).

On utilise de préférence l'oxyde mixte d'étain et d'indium (ITO) ou l'oxyde de zinc dopé à l'aluminium et/ou au gallium.

La somme des épaisseurs de toutes les couches d'oxyde conducteur situées dans le revêtement diélectrique directement au-dessus de la couche fonctionnelle à base d'argent est supérieure à 50 nm ou supérieure à 60 nm.

La somme des épaisseurs de toutes les couches d'oxyde conducteur situées dans le revêtement diélectrique directement au-dessus de la couche fonctionnelle à base d'argent est inférieure à 150 nm, inférieure à 100 nm ou inférieure à 80 nm.

De préférence, le revêtement diélectrique situé directement au-dessus de la couche fonctionnelle à base d'argent comprend au moins une couche d'oxyde conducteur d'épaisseur supérieure à 50 nm ou 60 nm.

De préférence, le revêtement diélectrique situé directement au-dessus de la couche fonctionnelle à base d'argent comprend au moins une couche d'oxyde conducteur à base d'oxyde de zinc dopé à l'aluminum d'épaisseur supérieure à 50 nm ou 60 nm.

Selon un mode de réalisation, le revêtement diélectrique peut comprendre au moins deux couches, une couche d'oxyde de zinc dopé à l'aluminium et une couche d'oxyde mixte d'étain et d'indium (ITO).

Selon l'invention, on entend par oxyde d'indium-étain (ou encore oxyde d'indium dopé à l'étain ou ITO pour l'appellation anglaise : Indium tin oxide) un oxyde mixte ou un mélange obtenu à partir des oxydes d'indium(III) (In2O3) et d'étain (IV) (SnO2), de préférence dans les proportions massiques comprises entre 70 et 95% pour le premier oxyde et 5 à 20% pour le second oxyde. Une proportion massique typique est d'environ 90 % massique d'In2O3 pour environ 10 % massique de SnO2.

Selon l'invention, les couches d'oxyde conducteur à base d'oxyde de zinc, peuvent comprendre, au moins 50 %, au moins 60 %, au moins 70 %, au moins 80 %, au moins 90 %, au moins 95 % en masse de zinc par rapport à la masse totale de tous les éléments constituant la couche à base d'oxyde de zinc à l'exclusion de l'oxygène et de l'azote. Pour être suffisamment conductrice, les couches à base d'oxyde de zinc sont dopées à l'aide d'au moins un autre élément dit « élément dopant ». Les couches à base d'oxyde de zinc peuvent donc comprendre un ou plusieurs éléments dopants choisis parmi l'aluminium, le titane, le niobium, le zirconium, le magnésium, le cuivre, l'argent, l'or, le silicium, le molybdène, le nickel, le chrome, le platine, l'indium, l'étain et l'hafnium, de préférence l'aluminium.

Les couches conductrices à base d'oxyde de zinc dopé, peuvent comprendre :
- au moins 1 %, au moins 2 % ou au moins 5 %, et/ou
- au plus 15 % ou au plus 10 %,
en masse d'élément dopants par rapport à la masse totale de tous les éléments constituant la couche à base d'oxyde de zinc à l'exclusion de l'oxygène et de l'azote.

Le revêtement diélectrique situé en-dessous de la couche fonctionnelle métallique à base d'argent ne doit pas nécessairement être conducteur. Avantageusement, il peut comprendre une couche cristallisée appelée également couche stabilisante ou de mouillage. On entend par couche stabilisante, une couche en un matériau apte à stabiliser l'interface avec la couche fonctionnelle. Ces couches sont en général à base d'oxyde de zinc.

Les couches à base d'oxyde de zinc, peuvent comprendre, au moins 50 %, au moins 60 %, au moins 70 %, au moins 80 %, au moins 90 %, au moins 95 %, au moins 96 %, au moins 97 %, au moins 98 %, au moins 99 % ou 100 % en masse de zinc par rapport à la masse totale de tous les éléments constituant la couche à base d'oxyde de zinc à l'exclusion de l'oxygène et de l'azote.

Pour être correctement cristallisées par dépôt par pulvérisation cathodique, les couches à base d'oxyde de zinc comprennent avantageusement au moins 80 %, voire au moins 90 % en masse de zinc par rapport à la masse totale de tous les éléments constituant la couche à base d'oxyde de zinc à l'exclusion de l'oxygène et de l'azote.

Les couches à base d'oxyde de zinc peuvent comprendre un ou plusieurs éléments choisis parmi l'aluminium, le titane, le niobium, le zirconium, le magnésium, le cuivre, l'argent, l'or, le silicium, le molybdène, le nickel, le chrome, le platine, l'indium, l'étain et l'hafnium, de préférence l'aluminium.

Les couches à base d'oxyde de zinc peuvent être éventuellement dopée à l'aide d'au moins un autre élément, comme l'aluminium.

La couche à base d'oxyde de zinc comprend, par ordre de préférence croissant, au moins 80 %, au moins 90 %, au moins 95 %, au moins 98 %, au moins 100 %, en masse d'oxygène par rapport à la masse totale de l'oxygène et de l'azote.

De préférence, le revêtement diélectrique situé directement en-dessous de la couche métallique fonctionnelle à base d'argent comporte au moins une couche diélectrique cristallisée, notamment à base d'oxyde de zinc, éventuellement dopé à l'aide d'au moins un autre élément, comme l'aluminium.

Ces couches d'oxyde de zinc ont une épaisseur :
- d'au moins 1,0 nm, d'au moins 2,0 nm, d'au moins 3,0 nm, d'au moins 4,0 nm ou d'au moins 5,0 nm, et/ou
- d'au plus 25 nm, d'au plus 15 nm, d'au plus 10 nm ou d'au plus 8,0 nm.

De préférence, le revêtement diélectrique situé directement en-dessous de la couche métallique fonctionnelle à base d'argent comporte au moins une couche diélectrique à fonction barrière. On entend par couches diélectriques à fonction barrière (ci-après couche barrière), une couche en un matériau apte à faire barrière à la diffusion de l'oxygène et de l'eau à haute température, provenant de l'atmosphère ambiante ou du substrat transparent, vers la couche fonctionnelle. De telles couches diélectriques sont choisies parmi les couches :
- à base de composés de silicium et/ou d'aluminium et/ou de zirconium choisis parmi les oxydes tels que SiO2, les nitrures tels que les nitrure de silicium Si3N4 et les nitrures d'aluminium AIN, et les oxynitrures SiOxNy, éventuellement dopé à l'aide d'au moins un autre élément,
- à base d'oxyde de zinc et d'étain,
- à base d'oxyde de titane.

Ces couches diélectriques à fonction barrière ont, par ordre de préférence croissant, une épaisseur :
- inférieure ou égale à 40 nm, inférieure ou égale à 30 nm, inférieure ou égale à 25 nm, et/ou
- supérieure ou égale à 5 nm, supérieure ou égale à 10 nm ou supérieure ou égale à 15 nm.

De préférence, le premier revêtement diélectrique comporte :
- une couche à base d'un nitrure ou d'oxynitrure d'aluminium et/ou de silicium et/ou de zirconium, et/ou
- une couche à base d'un oxyde mixte de zinc et d'étain, et/ou
- une couche à base d'un nitrure ou d'oxynitrure d'aluminium et/ou de silicium et/ou de zirconium et une couche diélectrique à base d'un oxyde mixte de zinc et d'étain située au-dessus, de préférence au contact, de la couche à base d'un nitrure ou d'oxynitrure d'aluminium et/ou de silicium et/ou de zirconium.

La couche à base d'oxyde de zinc et d'étain peut avoir une épaisseur comprise entre 2 et 30 nm, de préférence entre 5 et 20 nm. La couche à base d'un nitrure ou d'oxynitrure d'aluminium et/ou de silicium et/ou de zirconium peut avoir une épaisseur comprise entre 2 et 30 nm, de préférence entre 5 et 20 nm. La couche à base d'oxyde de zinc et d'étain est située en dessous, de préférence au contact, d'une couche à base d'oxyde de zinc.

Le substrat revêtu du revêtement électroconducteur ou le revêtement seulement est destiné à subir un traitement thermique. Cependant, la présente invention concerne également le matériau non traité thermiquement.

Le revêtement électroconducteur peut ne pas avoir subi un traitement thermique à une température supérieure à 500 °C, de préférence 300 °C.

Le revêtement peut avoir a subi un traitement thermique à une température supérieure à 300 °C, de préférence 500 °C.

Les traitements thermiques sont choisis parmi un recuit, par exemple par un recuit thermique rapide (« Rapid Thermal Process ») tel qu'un recuit laser ou lampe flash, une trempe et/ou un bombage. Le recuit thermique rapide est par exemple décrit dans la demande WO2008/096089. La température de traitement thermique (au niveau du revêtement) est supérieure à 300 °C, de préférence supérieure à 400 °C, et mieux supérieure à 500 °C.

Le substrat revêtu du revêtement peut être est un verre bombé ou trempé.

Les substrats transparents selon l'invention sont de préférence en un matériau rigide minéral, comme en verre, ou organiques à base de polymères (ou en polymère).

Les substrats transparents organiques selon l'invention peuvent également être en polymère, rigides ou flexibles. Des exemples de polymères convenant selon l'invention comprennent, notamment :
- le polyéthylène,
- les polyesters tels que le polyéthylène téréphtalate (PET), le polybutylène téréphtalate (PBT), le polyéthylène naphtalate (PEN) ;
- les polyacrylates tels que le polyméthacrylate de méthyle (PMMA) ;
- les polycarbonates ;
- les polyuréthanes ;
- les polyamides ;
- les polyimides ;
- les polymères fluorés comme les fluoroesters tels que l'éthylène tétrafluoroéthylène (ETFE), le polyfluorure de vinylidène (PVDF), le polychlorotrifluorethylène (PCTFE), l'éthylène de chlorotrifluorethylène (ECTFE), les copolymères éthylène-propylène fluores (FEP) ;
- les résines photoréticulables et/ou photopolymérisables, telles que les résines thiolène, polyuréthane, uréthane-acrylate, polyester-acrylate et
- les polythiouréthanes.

Le substrat est de préférence une feuille de verre ou de vitrocéramique.

Le substrat est de préférence transparent, incolore (il s'agit alors d'un verre clair ou extra-clair) ou coloré, par exemple en bleu, gris ou bronze. Le verre est de préférence de type silico-sodo-calcique, mais il peut également être en verre de type borosilicate ou alumino-borosilicate.

Selon un mode de réalisation préféré, le substrat est en verre, notamment silico-sodo-calcique ou en matière organique polymérique.

Le substrat possède avantageusement au moins une dimension supérieure ou égale à 1 m, voire 2 m et même 3 m.

L'épaisseur du substrat varie généralement entre 0,05 mm et 19 mm. Lorsque le substrat est minéral, son épaisseur est de préférence entre 0,7 et 9 mm, notamment entre 2 et 8 mm, voire entre 4 et 6 mm. Le substrat peut être plan ou bombé, voire flexible. Lorsque le substrat est organique, son épaisseur est de préférence comprise entre 1 et 2 mm.

### Exemples

### I. Revêtements electroconducteurs

Des revêtements électroconducteur ont été déposés par pulvérisation cathodique sur un substrat de verre transparent. Les substrats de verre sont des substrats de verre de type aluminosilicate de 2,1 mm.

Les couches fonctionnelles (F) sont des couches métalliques à base d'argent.

Les revêtements diélectriques comprennent :
- des couches à base de nitrure du silicium,
- des couches à base d'oxyde de zinc et d'étain,
- des couches de zinc dopé à l'aluminium,
- des couches indium et d'étain.

Les couches de blocage sont choisies parmi les couches de titane, de nitrure de titane, de nickel et de chrome, de zinc.

Les conditions de dépôt des couches, qui ont été déposées par pulvérisation (pulvérisation dite « cathodique magnétron »), sont résumées dans le tableau 1.

**[Tableau 1]**

| Couche | Cible employée | Pression Pa | Gaz |
|---|---|---|---|
| ITO | In₂O₃ 90%, SnO₂ 10% pds | 0,2 | Ar/(Ar + O2) à 99 % |
| Zn | Zn | 0,2 | Ar à 100% |
| NiCr | Ni:Cr à 80%:20% en poids | 0,2 | Ar à 100% |
| TiN | Ti | 0,1 à 1 | Ar 85% - N2 15% |
| Ti | Ti | 0,1 à 1 | Ar à 100% |
| Ag | Ag | 0,1 à 1 | Ar à 100% |
| SnZnO | Zn:Sn à 64:36 % at. | 0,1 à 1 | Ar/(Ar + O₂) à 50 % |
| Si3N4 | Si:Al à 92:8 % en pds | 0,32 | Ar /(Ar + N2) à 55 % |

Le tableau 2 liste les matériaux et les épaisseurs en nm (sauf autre indication) de chaque couche ou revêtement qui constitue les revêtements en fonction de leur position vis-à-vis du substrat porteur de l'empilement (dernière ligne en bas du tableau).

**[Tableau 2]**

| Rev. électroconducteur | | Rev. 1 | Rev. 6 | Rev. 7 | Inv. 4 |
|---|---|---|---|---|---|
| RD Sup. | AZO | 60 | 60 | 60 | 60 |
| | Zn | - | - | - | 2 |
| CB | Ti | 0,5 | - | - | - |
| | TiN | - | - | - | - |
| | NiCr | - | 1 | - | 1 |
| | Zn | - | - | 2 | - |
| CF | Ag | 10 | 10 | 10 | 10 |
| RD inf. | AZO | 5 | 5 | 5 | 5 |
| | SnZnO | 5 | 5 | 5 | 5 |
| | Si3N4 | 20 | 20 | 20 | 20 |
| Substrat | verre | 2 mm | 2 mm | 2 mm | 2 mm |

Les premiers revêtements diélectriques comprennent une séquence SiN/SnZnO/ZnO pour prévenir la diffusion d'espèce chimique à partir du substrat et diminuer la rugosité de surface et optimiser la qualité de l'argent.

### II. Détermination des propriétés électrochimique

Afin de déterminer les propriétés électrochimiques des revêtements conducteurs par rapport aux espèces mobiles de l'électrolyte tels que Li/Li+, des cycles voltampérométriques ont été réalisés. Pour cela, la réponse en courant résultant d'une variation continue du potentiel du revêtement électroconducteur (utilisé comme électrode de travail) sur laquelle se produit la réaction électrochimique étudiée est mesurée.

Les figures 1 et 2 représentent des cycles voltampérométriques réalisés à partir d'un montage à base de trois électrodes avec une contre électrode de lithium métallique, une électrode de référence de lithium métallique et une électrode de travail comprenant les différents revêtements électroconducteurs. L'électrolyte est composé d'une solution de LiClO4/PC.

Les voltamogrammes sont réalisés dans la fenêtre de potentiel de 2 à 4 V par rapport à Li/Li+ à une vitesse de balayage de 2 mV/s.

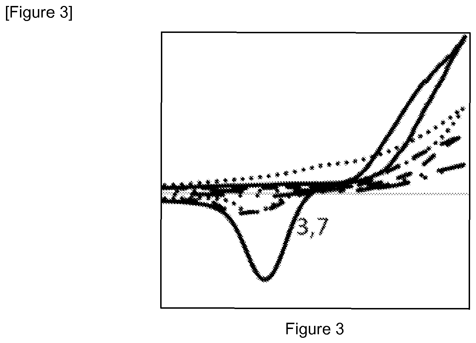

La figure 3 est un agrandissement de la figure 2 autour de 3,7 V.

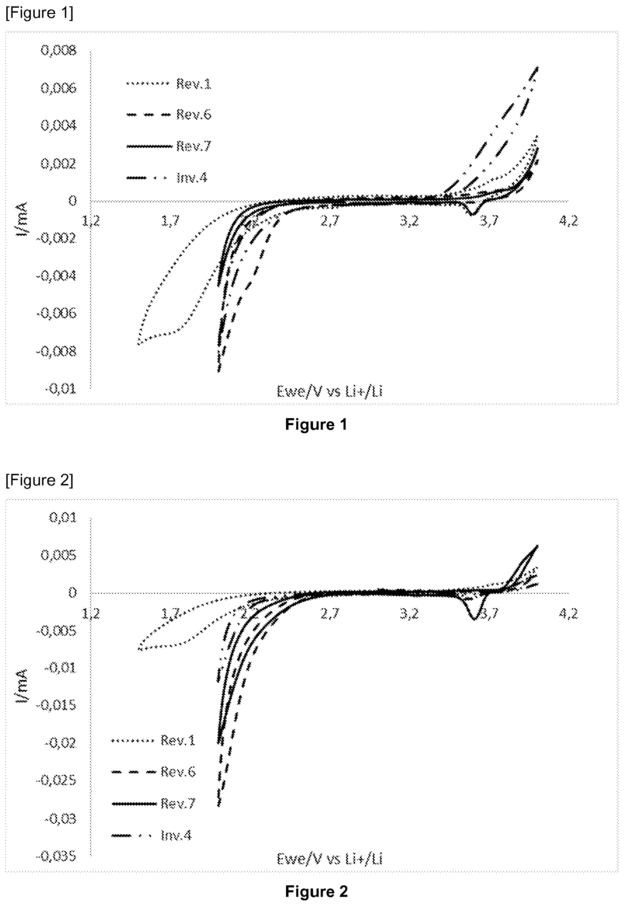

Les revêtements électroconducteurs testés de la figure 1 n'ont pas subi de traitement thermique. Les revêtements électroconducteurs testés de la figure 2 ont subi un traitement thermique à 600°C pendant 8 minutes.

### 1. Absence de traitement thermique

Sur la figure 1, pour les revêtement Rev.1 et Rev.7 comprenant respectivement une couche de blocage à base de titane ou de zinc métallique, aucune réaction d'oxydation n'est observée entre 2 V et 3,4 V. Une légère augmentation de la densité de courant est observée autour de 3,4 V vs Li/Li+, suivie d'une forte augmentation autour de 3,7 V vs Li/Li+. Cette forte augmentation est imputable à l'oxydation de l'Ag métallique en ions Ag+ qui se dissolvent dans l'électrolyte. Cela démontre que de tels revêtements électroconducteur ne peuvent pas être utilisés dans des dispositifs électrochrome. La présence seule d'une couche à base de zinc métallique ou d'une couche de titane métallique a proximité de la couche d'argent ne montre pas d'effet positif. Les présences des pics d'oxydo-réduction témoignent de la dégradation de l'électrode.

Le rev.6 comprenant une couche de blocage à base de NiCr ne présente pas de pics d'oxydoréduction. En l'absence de traitement thermique une couche de blocage à base de NiCr seule permet d'améliorer la plage de stabilité du revêtement électroconducteur à base d'argent.

Le revêtement Inv.4 selon l'invention comprenant une couche de blocage à base de NiCr et une couche de zinc métallique ne présente pas de pics d'oxydo-réduction. On observe donc bien une amélioration de la stabilité électrochimique. On observe une augmentation en courant pour les potentiels élevés. Elle pourrait être attribuable à l'augmentation de la conductivité du revêtement due à la contribution de la couche métallique de zinc.

### 2. Après traitement thermique

Après traitement thermique, on observe des pics d'oxydo-reduction pour Rev.1, Rev.7 et Rev.6. Cela signifie que le revêtement électroconducteur est dégradé.

Pour le rev.7 comprenant une couche de blocage à base de zinc métallique seule, ce phénomène est particulièrement important. Une augmentation en courant au-dessus de 3,4 V est observée ainsi que des pic d'oxydo-réductions à 3,6 et 3,7V. Après traitement thermique, la présence d'une couche de zinc métallique seule ne permet pas d'améliorer la stabilité électrochimique de l'argent.

Pour le Rev.6 comprenant une couche de blocage à base de NiCr, l'impact positif de cette couche est plus faible en cas de traitement thermique. En effet, bien que l'augmentation autour de 3,4V soit faible, des pic de réduction à 3,6 V par rapport à Li+/Li sont observés correspondant à une dégradation de l'argent.

Les meilleurs résultats sont obtenus pour le revêtement électroconducteur de l'invention Inv.4.

On n'observe ni pics d'oxydo-réduction, ni monté en tension pour les potentiels élevés.

L'effet combiné de la présence d'une couche de blocage et d'une couche de zinc métallique montre une amélioration forte de la stabilité électrochimique de l'argent. On observe qu'une très faible augmentation de courant au-dessus de 3,4 V et aucun pic d'oxydo-réduction.

L'effet obtenu par la combinaison particulière de l'invention est supérieur aux effets individuellement obtenus. Une couche de blocage de zinc métallique seule n'améliore pas la stabilité électrochimique de l'argent. Une couche de blocage de NiCr n'empêche pas l'oxydoréduction de la couche d'argent après traitement thermique (supérieur à 500°C). Leur combinaison permet de ne pas dégrader la couche d'argent.

L'association d'une couche de blocage avec une couche métallique de zinc susceptible de diffuser et de former un alliage avec l'argent améliore la stabilité électrochimique du revêtement à base d'argent au-dessus de 3,7V par rapport Li/Li+ après traitement thermique.

L'invention permet d'utiliser le revêtement à base d'argent dans un dispositif électrochromique à contraste élevé fonctionnant sur la plage 2-4V vs Li/Li+.

## Revendications

1. Matériau comprenant un substrat revêtu d'un premier revêtement conducteur comprenant en partant du substrat :
- un premier revêtement diélectrique,
- une couche fonctionnelle métallique à base d'argent,
- une couche de blocage située immédiatement au contact de la couche métallique fonctionnelle à base d'argent, choisie parmi les couches métalliques à base d'un métal ou d'un alliage métallique, les couches de nitrure métallique, les couches d'oxyde métallique et les couches d'oxynitrure métallique, d'un ou plusieurs éléments choisis parmi le titane, le nickel, le chrome, le tantale et le niobium, les couches d'oxyde d'aluminium et les couches d'oxyde de silicium,
- un deuxième revêtement diélectrique comprenant au moins une couche d'oxyde conducteur, la somme des épaisseurs des couches d'oxyde conducteur dans le deuxième revêtement diélectrique est supérieure à 30 nm et **caractérisé en ce que** le matériau comprend au moins une couche métallique à base de zinc ou d'indium, située au-dessus ou en dessous de cette couche métallique fonctionnelle à base d'argent, directement au contact ou séparée par une ou plusieurs couches dont l'épaisseur totale est inférieure ou égale à 20 nm.

2. Matériau selon la revendication 1, **caractérisé en ce que** la couche de blocage présente une épaisseur comprise entre 0,1 et 5,0 nm.

3. Matériau selon l'une quelconque des revendications précédentes, **caractérisé en ce que** la couche de blocage est choisie parmi une couche de nitrure de titane, les couches métalliques à base de nickel et/ou de chrome, les couches d'oxyde de nickel et/ou de chrome, les couches d'oxyde d'aluminium, les couches d'oxyde de silicium.

4. Matériau selon l'une quelconque des revendications précédentes, **caractérisé en ce que** la couche métallique à base de zinc ou d'indium est séparée de la couche métallique fonctionnelle à base d'argent par au moins une couche de blocage.

5. Matériau selon l'une quelconque des revendications précédentes, **caractérisé en ce que** l'épaisseur de toutes les couches séparant la couche métallique fonctionnelle à base d'argent de la couche métallique à base de zinc ou d'indium est inférieure ou égale à 10 nm.

6. Matériau selon l'une quelconque des revendications précédentes, **caractérisé en ce que** l'épaisseur de la couche métallique à base de zinc ou d'indium est comprise de 0,2 à 10 nm.

7. Matériau selon l'une quelconque des revendications précédentes, **caractérisé en ce que** le deuxième revêtement diélectrique comprend une couche d'oxyde conducteur choisie parmi l'oxyde mixte d'étain et d'indium, l'oxyde d'indium dopé à l'étain, l'oxyde de zinc dopé, l'oxyde de ruthénium dopé et l'oxyde d'étain dopé au fluor.

8. Matériau selon l'une quelconque des revendications précédentes, **caractérisé en ce que** le deuxième revêtement diélectrique comprend une couche d'oxyde conducteur choisie parmi l'oxyde mixte d'étain et d'indium ou l'oxyde de zinc dopé à l'aluminium et/ou au gallium.

9. Matériau selon l'une quelconque des revendications précédentes, **caractérisé en ce que** le deuxième revêtement diélectrique comprend une couche d'oxyde conducteur à base d'oxyde de zinc dopé à l'aluminium d'épaisseur supérieure à 50 nm.

10. Matériau selon l'une quelconque des revendications précédentes, **caractérisé en ce que** le premier revêtement diélectrique comporte au moins une couche diélectrique cristallisée, notamment à base d'oxyde de zinc, éventuellement dopé à l'aide d'au moins un autre élément, comme l'aluminium.

11. Matériau selon l'une quelconque des revendications précédentes, **caractérisé en ce que** le premier revêtement diélectrique comporte :
- une couche à base de nitrure ou d'oxynitrure de silicium, d'aluminium et/ou de zirconium, et/ou
- une couche à base d'oxyde de zinc et d'étain.

12. Matériau selon l'une quelconque des revendications précédentes **caractérisé en ce que** le revêtement conducteur a subi un traitement thermique à une température supérieure à 300 °C, de préférence 500 °C.

13. Matériau selon la revendication précédente **caractérisé en ce que** la couche fonctionnelle à base d'argent comprend du zinc.

14. Système électrochrome comprenant:
- un matériau selon la revendication 1 et dans lequel ladite couche métallique est une couche métallique à base de zinc,
- une première couche active comprenant un matériau électrochrome,
- une couche électrolyte,
- une deuxième couche active et
- un deuxième revêtement électroconducteur transparent,
- éventuellement un substrat.

## Patentansprüche

1. Material, umfassend ein Substrat, das mit einer ersten leitfähigen Beschichtung beschichtet ist, umfassend ausgehend von dem Substrat:
- eine erste dielektrische Beschichtung,
- eine metallische Funktionsschicht auf Basis von Silber,
- eine Blockierschicht, die sich unmittelbar in Kontakt mit der metallischen Funktionsschicht auf Basis von Silber befindet, ausgewählt aus metallischen Schichten auf Basis eines Metalls oder einer Metalllegierung, Metallnitridschichten, Metalloxidschichten und Metalloxynitridschichten, eines oder mehrerer Elemente, ausgewählt aus Titan, Nickel, Chrom, Tantal und Niob, Aluminiumoxidschichten und Siliziumoxidschichten,
- eine zweite dielektrische Beschichtung, umfassend mindestens eine leitfähige Oxidschicht, wobei die Summe der Dicken der leitfähigen Oxidschichten in der zweiten dielektrischen Beschichtung größer als 30 nm ist, und **dadurch gekennzeichnet, dass** das Material mindestens eine metallische Schicht auf Basis von Zink oder Indium umfasst, die oberhalb oder unterhalb dieser metallischen Funktionsschicht auf Basis von Silber angeordnet ist, in direktem Kontakt oder getrennt durch eine oder mehrere Schichten, deren Gesamtdicke kleiner oder gleich 20 nm ist.

2. Material nach Anspruch 1, **dadurch gekennzeichnet, dass** die Blockierschicht eine Dicke zwischen 0,1 und 5,0 nm aufweist.

3. Material nach einem der vorstehenden Ansprüche,
**dadurch gekennzeichnet, dass** die Blockierschicht ausgewählt ist aus einer Titannitridschicht, metallischen Schichten auf Basis von Nickel und/oder Chrom, Nickel- und/oder Chromoxidschichten, Aluminiumoxidschichten, Siliziumoxidschichten.

4. Material nach einem der vorstehenden Ansprüche,
**dadurch gekennzeichnet, dass** die Metallschicht auf Basis von Zink oder Indium von der metallischen Funktionsschicht auf Basis von Silber durch mindestens eine Blockierschicht getrennt ist.

5. Material nach einem der vorstehenden Ansprüche,
**dadurch gekennzeichnet, dass** die Dicke aller Schichten, welche die metallische Funktionsschicht auf Basis von Silber von der Metallschicht auf Basis von Zink oder Indium trennen, kleiner als oder gleich 10 nm ist.

6. Material nach einem der vorstehenden Ansprüche,
**dadurch gekennzeichnet, dass** die Dicke einer Metallschicht auf Basis von Zink oder Indium von 0,2 bis 10 nm beträgt.

7. Material nach einem der vorstehenden Ansprüche,
**dadurch gekennzeichnet, dass** die zweite dielektrische Beschichtung eine leitfähige Oxidschicht umfasst, ausgewählt aus einem Mischoxid aus Zinn und Indium, mit Zinn dotiertem Indiumoxid, dotiertem Zinkoxid, dotiertem Rutheniumoxid und mit Fluor dotiertem Zinnoxid.

8. Material nach einem der vorstehenden Ansprüche,
**dadurch gekennzeichnet, dass** die zweite dielektrische Beschichtung eine leitfähige Oxidschicht umfasst, ausgewählt aus einem Mischoxid aus Zinn und Indium oder mit Aluminium und/oder Gallium dotiertem Zinkoxid.

9. Material nach einem der vorstehenden Ansprüche,
**dadurch gekennzeichnet, dass** die zweite dielektrische Beschichtung eine leitfähige Oxidschicht auf Basis von mit Aluminium dotiertem Zinkoxid mit einer Dicke von mehr als 50 nm umfasst.

10. Material nach einem der vorstehenden Ansprüche,
**dadurch gekennzeichnet, dass** die erste dielektrische Beschichtung mindestens eine kristallisierte dielektrische Schicht umfasst, insbesondere auf Basis von Zinkoxid, dotiert gegebenenfalls mithilfe mindestens eines anderen Elements, wie Aluminium.

11. Material nach einem der vorstehenden Ansprüche,
**dadurch gekennzeichnet, dass** die erste dielektrische Beschichtung umfasst:
- eine Schicht auf Basis von Nitrid oder Oxynitrid von Silizium, Aluminium und/oder Zirkonium, und/oder
- eine Schicht auf Basis von Zinkoxid und Zinn.

12. Material nach einem der vorstehenden Ansprüche,
**dadurch gekennzeichnet, dass** die leitfähige Beschichtung einer Wärmebehandlung bei einer Temperatur über 300 °C, vorzugsweise 500 °C, ausgesetzt wurde.

13. Material nach dem vorstehenden Anspruch,
**dadurch gekennzeichnet, dass** die Funktionsschicht auf Basis von Silber Zink umfasst.

14. Elektrochromes System, umfassend:
- ein Material nach Anspruch 1, und wobei die Metallschicht eine Metallschicht auf Basis von Zink ist,
- eine erste aktive Schicht, die ein elektrochromes Material umfasst,
- eine Elektrolytschicht,
- eine zweite aktive Schicht und
- eine zweite transparente elektrisch leitfähige Beschichtung,
- gegebenenfalls ein Substrat.

## Claims

1. A material comprising a substrate coated with a first conductive coating comprising, starting from the substrate:
- a first dielectric coating,
- a silver-based metal functional layer,
- a blocking layer located immediately in contact with the silver-based metal functional layer, selected from metal layers based on a metal or metal alloy, metal nitride layers, metal oxide layers and metal oxynitride layers, of one or more elements selected from titanium, nickel, chromium, tantalum and niobium, aluminum oxide layers and silicon oxide layers,
- a second dielectric coating comprising at least one conductive oxide layer, the sum of the thicknesses of the conductive oxide layers in the second dielectric coating being greater than 30 nm and wherein the material comprises at least one zinc or indium-based metal layer located above or below this silver-based metal functional layer, directly in contact therewith or separated by one or more layers which have a total thickness of less than or equal to 20 nm.

2. The material according to claim 1, **characterized in that** the blocking layer has a thickness of between 0.1 and 5.0 nm.

3. The material according to any one of the preceding claims, **characterized in that** the blocking layer is selected from a titanium nitride layer, nickel- and/or chromium-based metal layers, nickel and/or chromium oxide layers, aluminum oxide layers, silicon oxide layers.

4. The material according to any one of the preceding claims, **characterized in that** the zinc- or indium-based metal layer is separated from the silver-based metal functional layer by at least one blocking layer.

5. The material according to any one of the preceding claims, **characterized in that** the thickness of all the layers separating the silver-based metal functional layer from the zinc- or indium-based metal layer is less than or equal to 10 nm.

6. The material according to any one of the preceding claims, **characterized in that** the thickness of the zinc- or indium-based metal layer is from 0.2 to 10 nm.

7. The material according to any one of the preceding claims, **characterized in that** the second dielectric coating comprises a conductive oxide layer selected from mixed tin and indium oxide, tin-doped indium oxide, doped zinc oxide, doped ruthenium oxide and fluorine-doped tin oxide.

8. The material according to any one of the preceding claims, **characterized in that** the second dielectric coating comprises a conductive oxide layer selected from tin indium mixed oxide or zinc oxide doped with aluminum and/or gallium.

9. The material according to any one of the preceding claims, **characterized in that** the second dielectric coating comprises a conductive oxide layer based on aluminum-doped zinc oxide with a thickness greater than 50 nm.

10. The material according to any one of the preceding claims, **characterized in that** the first dielectric coating comprises at least one crystallized dielectric layer, in particular based on zinc oxide, optionally doped using at least one other element, such as aluminum.

11. The material according to any one of the preceding claims, **characterized in that** the first dielectric coating comprises:
- a layer based on silicon, aluminum and/or zirconium nitride or oxynitride, and/or
- a layer based on zinc tin oxide.

12. The material according to any one of the preceding claims, **characterized in that** the conductive coating has been subjected to a heat treatment at a temperature greater than 300°C, preferably 500°C.

13. The material according to the preceding claim, **characterized in that** the silver-based functional layer comprises zinc.

14. An electrochromic system comprising:
- a material according to claim 1 and wherein the metallic layer is a zinc-based metal layer,
- a first active layer comprising an electrochromic material,
- an electrolyte layer,
- a second active layer, and
- a second transparent electroconductive coating,
- optionally a substrate.
